# FASCICULE DE BREVET EUROPEEN

(11) **EP 3 587 230 B1**
(45) Date de publication et mention de la délivrance du brevet: **17.06.2020**
(21) Numéro de dépôt: 19170550.8
(22) Date de dépôt: 23.04.2019
(51) Int. Cl.: B62K 3/04, B62K 19/38, B62K 25/04

(54) **CADRE DE VÉLO**
FAHRRADRAHMEN
BICYCLE FRAME

(30) Priorité: 27.06.2018 FR 1855814
(43) Date de publication de la demande: 01.01.2020
(73) Titulaire: Look Cycle International, 58000 Nevers (FR)
(72) Inventeur: CARON, Frédéric, 32000 AUCH (FR); BIGARD, Pierre, 60110 MERU (FR); PAVARD, Julien, 58180 MARZY (FR)
(74) Mandataire: Hervouet-Malbec, Sylvie

(56) Documents cités:
- FR-A1- 2 807 995
- KR-B1- 101 740 038
- US-A1- 2012 061 941
- US-A1- 2012 126 508
- US-A1- 2012 146 311

## Description

La présente invention concerne de manière générale le domaine des vélos ou bicyclettes, et plus précisément un cadre de vélo dont les haubans sont aérodynamiques tout en formant des moyens d'amortissement des chocs.

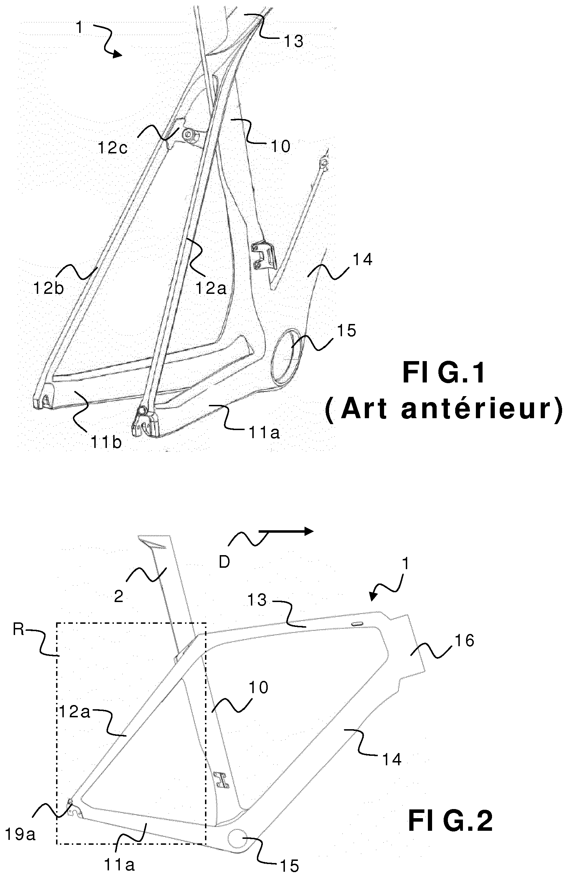

Le cadre d'un vélo est l'élément qui assure la liaison entre les principaux éléments du vélo. Un cadre de vélo 1 classique est généralement constitué, comme visible sur l'exemple de la figure 1, de deux parties agencées de part et d'autre d'un tube de selle 10 du cadre, apte à recevoir une tige de selle (non représentée), à savoir :
- une partie arrière, communément appelée triangle arrière, comportant deux bases 11a, 11b et deux haubans 12a, 12b disposés symétriquement par rapport au plan de symétrie du cadre, pour recevoir le moyeu d'une roue arrière (non représentée) dans les zones de jonction entre chaque base et son hauban associé ;
- une partie avant, communément appelé triangle avant, comportant classiquement un tube supérieur 13, un tube de direction (non représenté sur la figure 1) pour recevoir la fourche avant (non représentée) du vélo, un tube inférieur 14 et un boîtier de pédalier 15.

Le tube de selle 10, le tube supérieur 13 et le tube de direction s'étendent dans le plan de symétrie du cadre de vélo. Les deux bases 11a, 11b et les deux haubans 12a, 12b sont disposés symétriquement par rapport au plan de symétrie du cadre de vélo.

Différentes formes de cadres existent selon l'usage précis auquel est destiné le vélo. Par exemple, dans une géométrie considérée comme traditionnelle, le cadre est conçu pour qu'en position normale d'un vélo équipé d'un tel cadre (c'est-à-dire avec une roue avant et une roue arrière en contact avec une surface de sol et selon une orientation verticale du plan de symétrie du cadre), le tube supérieur s'étende généralement approximativement parallèlement à la surface du sol. La figure 1 montre une autre géométrie plus compacte du cadre, particulièrement adaptée aux vélos de route, dans laquelle le tube supérieur 13 est incliné vers le bas depuis le tube de direction jusqu'au tube de selle 10, et les haubans 12a, 12b se raccordent au tube de selle 10 sensiblement à la même hauteur que le tube supérieur. Cette configuration à tube oblique est connue sous la terminologie anglo-saxonne de « sloping tube ». Cette géométrie permet en particulier aux cyclistes de petite taille de ne pas être gênés par ce tube supérieur lorsqu'ils ont besoin de poser un pied à terre.

En outre, dans l'exemple illustré, chaque hauban 12a, 12b présente une section en coupe transversale perpendiculaire de forme allongée selon une direction parallèle au plan de symétrie. En d'autres termes, les haubans ont une largeur plus faible vus de l'arrière du cadre que leur largeur en vue de côté, ce qui confère un bon aérodynamisme au vélo équipé d'un tel cadre. En revanche, ce type de vélo est généralement peu confortable du fait d'une rigidité verticale importante du cadre. Cette rigidité est d'autant plus importante que le cadre comporte classiquement une pièce 12c formant un pont en reliant mécaniquement les deux haubans 12a, 12b, cette pièce servant généralement de support de montage d'un frein arrière à patins (non représenté).

Le confort du vélo passe notamment par une filtration des vibrations et des petits chocs. La conception de la partie arrière du cadre de vélo influence beaucoup le confort du cycliste au niveau de la selle. Ainsi, il existe déjà de nombreuses solutions d'amortissement des chocs au niveau de la partie arrière du vélo. Parmi ces solutions, on connaît notamment du document US 9, 010, 790 un cadre de bicyclette dont les deux haubans s'étendent au-delà du tube de selle et se connectent directement au tube supérieur sans être reliés rigidement au tube de selle. Lorsqu'un tel cadre est soumis à un effort vertical (par exemple le poids d'un cycliste assis sur la selle du vélo équipé d'un tel cadre), le tube de selle s'incline vers l'arrière et vers le bas par rapport à sa position neutre (sans effort vertical), et les bases et haubans associés pivotent vers le haut à partir du boîtier de pédalier par rapport à leurs positions neutres. En d'autres termes, un effort vertical engendre une flexion verticale des haubans, parallèlement au plan de symétrie dans son orientation verticale. Bien que ce type de solutions permettant la flexion verticale des haubans procure un confort amélioré pour le cycliste, il est nécessaire, pour que la flexion verticale des haubans soit suffisante, que les haubans présentent une section en coupe transversale perpendiculaire de forme allongée selon une direction perpendiculaire au plan de symétrie. En d'autres termes, les haubans vus du côté du cadre doivent avoir une largeur plus faible que leur largeur vus de l'arrière du cadre. Ces sections donnent une plus grande surface frontale et augmentent la traînée, ce qui réduit l'aérodynamisme.

US 2012/061941 A1 divulgue les caractéristiques du préambule de la revendication 1.

En conséquence, aucune des solutions de l'art antérieur ne permet d'offrir simultanément un confort et un aérodynamisme améliorés.

La présente invention vise à pallier les limitations de l'art antérieur et a pour objet, pour ce faire, un cadre de vélo comportant un tube de selle configuré pour recevoir une tige de selle, une partie avant comprenant un tube supérieur reliant le tube de selle à un tube de direction, ledit tube de selle, ledit tube supérieur et ledit tube de direction s'étendant dans un plan de symétrie du cadre de vélo, et une partie arrière comprenant deux bases et deux haubans disposés symétriquement par rapport au plan de symétrie du cadre de vélo, caractérisé en ce que chaque hauban présente une section en coupe transversale perpendiculaire de forme allongée selon une direction parallèle au plan de symétrie, en ce que les deux haubans sont indépendants l'un de l'autre et en ce que les deux haubans ont une préforme arquée selon au moins un arc de cercle dans un plan passant par les deux haubans, de manière à permettre aux deux haubans de s'écarter ou de se rapprocher l'un de l'autre sous l'action d'un effort vertical.

Selon d'autres particularités possibles, un cadre de vélo conforme à la présente invention peut en outre comporter les caractéristiques suivantes, prises isolément ou en combinaison :
- la préforme peut être arquée vers l'extérieur du cadre de vélo ;
- en variante, la préforme peut être arquée vers l'intérieur du cadre de vélo ;
- en variante, la préforme comporte une succession d'arcs de cercle alternativement arqués vers l'intérieur puis vers l'extérieur du cadre de vélo ;
- les deux haubans sont reliés de préférence chacun sur une moitié latérale avant du tube de selle ;
- les deux haubans peuvent être reliés chacun sur l'extrémité supérieure du tube de selle ;
- le cadre peut comporter en outre une patte de fixation pour frein à patins qui s'étend dans le plan de symétrie du cadre, depuis le tube de selle vers la partie arrière ;
- en variante, le cadre peut comporter en outre un élément de fixation solidaire d'un boîtier de pédalier dudit cadre de vélo pour supporter un frein à patins sous les deux bases ;
- en variante, le cadre peut comporter en outre un élément de support prévu à chaque extrémité des haubans au niveau des jonctions avec les bases pour supporter un frein arrière à disque.

L'invention, ainsi que les avantages qu'elle procure, seront mieux compris au vu de la description suivante d'un exemple de réalisation, fait en référence aux figures annexées, dans lesquelles :
- La figure 1, déjà décrite ci-avant, illustre partiellement en perspective de trois-quarts arrière d'une partie arrière d'un cadre de vélo aérodynamique de l'art antérieur ;
- la figure 2 illustre une vue de côté d'un ensemble constitué d'une tige de selle et d'un cadre de vélo selon un mode de réalisation possible de l'invention ;
- la figure 3 illustre une vue trois-quarts arrière de l'ensemble de la figure 2 ;
- la figure 4 est une vue en coupe d'une partie supérieure du cadre de la figure 2, montrant une portion de la partie supérieure du tube de selle et des haubans;
- la figure 5 est un agrandissement d'une zone R de la figure 2, illustrant un exemple de variations de section des haubans sur leur longueur ;
- la figure 6 représente une vue arrière du cadre seul de l'ensemble de la figure 2, sans la tige de selle ;
- les figures 7a et 7b illustrent des tests comparatifs de déformation pour un cadre selon l'art antérieur et un cadre conforme à l'invention ;
- la figure 8 représente une vue trois-quarts arrière d'une partie supérieure du cadre seul de l'ensemble de la figure 2, sans la tige de selle;
- la figure 9 représente une vue partielle de dessous illustrant une zone de fixation d'un hauban.

Dans la suite de l'exposé, et à moins qu'il n'en soit disposé autrement, tous les éléments communs aux différentes figures portent les mêmes références.

Par ailleurs, les termes relatifs à des directions ou des positionnements, tels que l'avant ou l'arrière, sont utilisés par rapport à la position d'une bicyclette ayant une roue avant et une roue arrière en contact avec une surface de sol horizontale et dans une orientation verticale.

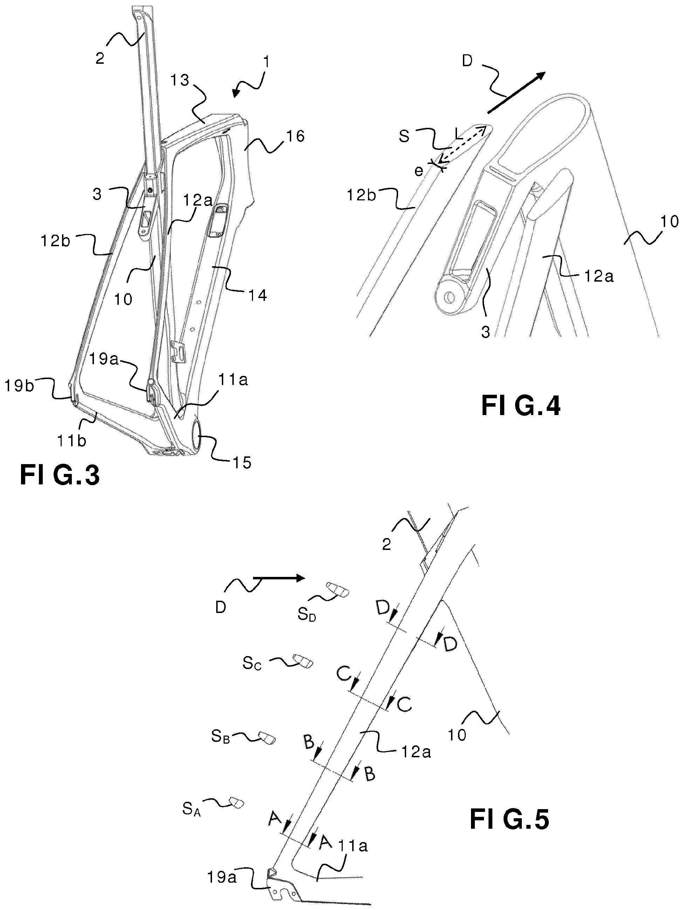

Les figures 2 et 3 représentent, en vue de côté et en vue trois-quarts arrière, un ensemble constitué d'un cadre de vélo selon un mode de réalisation possible de l'invention et d'une tige de selle 2. Le cadre de vélo 1 comporte classiquement, comme le cadre de l'art antérieur présenté en figure 1, un tube de selle 10 configuré pour recevoir la tige de selle 2, une partie arrière comportant deux bases 11a, 11b et deux haubans 12a, 12b, et une partie avant comportant classiquement un tube supérieur 13, un tube inférieur 14, un boîtier de pédalier 15 et un tube de direction 16.

Le tube supérieur 13 est relié, à une première extrémité, au tube de direction 16 et, à une deuxième extrémité, au tube de selle 10. Le tube inférieur 14 est relié, à une première extrémité, au tube de direction 16 et, à une deuxième extrémité, au boîtier de pédalier 15. Le tube de selle 10 est relié à son extrémité inférieure au boîtier de pédalier 15.

Les axes longitudinaux du tube de selle 10, du tube supérieur 13, du tube de direction 16 et du tube inférieur 14 sont tous situés dans un même plan, appelé plan de symétrie du cadre. Les bases 11a, 11b et les haubans 12a, 12b sont disposés symétriquement par rapport au plan de symétrie du cadre. Plus précisément, la base 11a est reliée à une première extrémité au boîtier de pédalier 15, et à une deuxième extrémité au hauban 12a, alors que la base 11b est reliée à une première extrémité au boîtier de pédalier 15, et à une deuxième extrémité au hauban 12b. Les zones de jonction entre d'une part, la base 11a et le hauban 12a, et d'autre part, la base 11b et le hauban 12b comportent des pattes de fixation 19a, 19b aptes à recevoir un moyeu d'une roue arrière (non représentée) du vélo pour coupler en rotation la roue arrière au cadre.

Les différents éléments du cadre 1 sont de préférence réalisés en un matériau composite à base de fibres de carbone ou d'un autre matériau composite et moulés en une seule unité ou en plusieurs unités individuelles qui sont ensuite couplées ensemble. L'avantage des matériaux composites est qu'ils peuvent être façonnés en une variété de formes et de constructions pour des cadres de bicyclettes. D'autres matériaux, par exemple de l'aluminium, sont néanmoins envisageables pour tout ou partie des éléments du cadre.

Le principe sur lequel repose la présente invention est de proposer une conception de haubans qui vont pouvoir, sous l'action d'un effort globalement vertical, se déformer dans une direction latérale par rapport au plan de symétrie du cadre, en travaillant notamment en flambage.

Cette déformation latérale est rendue possible par la combinaison de plusieurs caractéristiques qui vont être à présent décrites :
Selon une première caractéristique de l'invention, chaque hauban 12a, 12b a une section en coupe transversale perpendiculaire de forme allongée selon une direction parallèle au plan de symétrie du cadre. Par « section en coupe transversale perpendiculaire », on entend une section dans un plan perpendiculaire à l'axe longitudinal du hauban. Cette caractéristique est particulièrement visible sur la figure 4 sur laquelle une section S du hauban 12b présente globalement une forme d'ellipse, avec une dimension « e » perpendiculaire au plan de symétrie du cadre plus faible que la dimension « L » parallèle au plan de symétrie du cadre (ou ici à la direction de déplacement d'un vélo équipé du cadre, représentée sur les figures par une flèche D).

La section en coupe transversale perpendiculaire peut être constante sur toute la longueur des haubans 12a, 12b. En variante, cette section peut être variable. Ainsi, la figure 5 illustre une variation possible de sections S_{A}, S_{B}, S_{C} et S_{D} du hauban 12a correspondant respectivement aux coupes selon les lignes A-A, B-B, C-C et D-D. Ici, les sections vont en augmentant depuis l'extrémité inférieure du hauban 12a jusqu'à son extrémité supérieure. Pour autant, la dimension la plus grande en largeur des sections S_{A}, S_{B}, S_{C} S_{D} du hauban 12a est toujours celle qui s'étend parallèlement au plan de symétrie du cadre. Les haubans 12a, 12b offrent ainsi une très faible résistance au vent lors du déplacement du vélo, ce qui confère un bon aérodynamisme.

Selon une deuxième caractéristique de l'invention, les deux haubans 12a, 12b sont indépendants l'un de l'autre. Par « indépendants», on entend qu'il n'existe aucune pièce reliant mécaniquement entre eux les deux haubans, hormis la pièce sur laquelle l'extrémité supérieure des haubans est reliée. En particulier, le cadre selon l'invention ne comporte pas le pont 12c pour supporter un frein à patins.

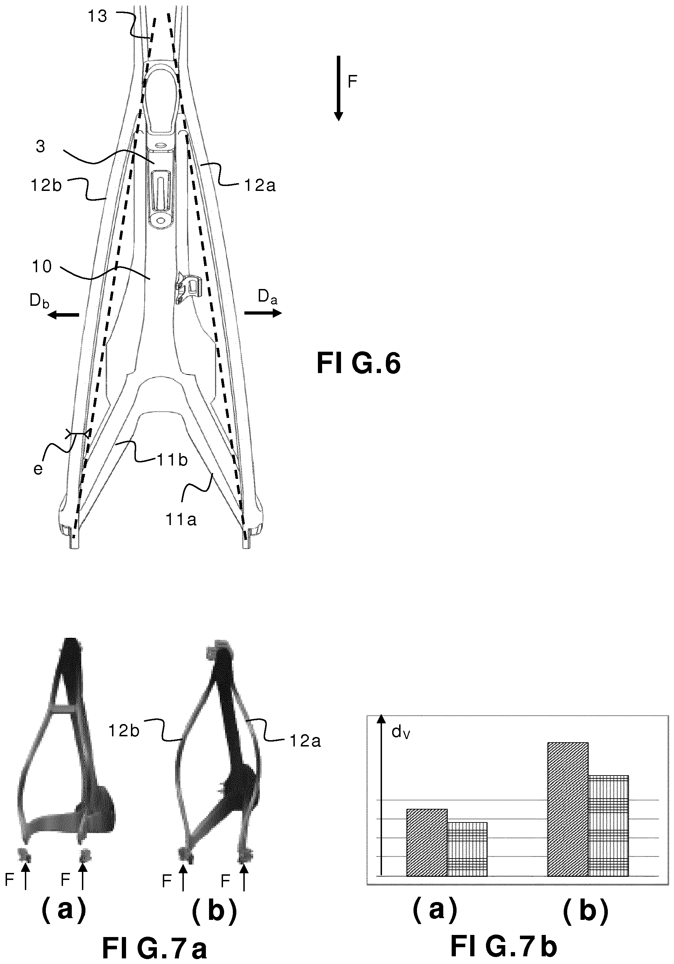

Selon une troisième caractéristique de l'invention, les deux haubans 12a, 12b ont, lorsque le cadre 1 est au repos, une préforme arquée selon au moins un arc de cercle dans un plan passant par ces deux haubans. Par exemple, sur la figure 6 qui représente une vue arrière du cadre de vélo 1, les deux haubans 12a, 12b ont une préforme arquée vers l'extérieur du cadre de vélo, contrairement aux haubans de forme droite du cadre de la figure 1 qui auraient suivis les deux lignes droites en trait interrompus portées sur la figure 6. Dans cette configuration, lorsque le cadre est soumis à un effort vertical, tel que l'effort représenté par la flèche F sur la figure 6, les haubans vont pouvoir se déformer latéralement, en s'écartant l'un de l'autre, comme symbolisé par les deux flèches Dₐ et D_{b} de la figure 6.

Dans un autre exemple de réalisation non représenté, la préforme des haubans est arquée vers l'intérieur du cadre de vélo. Dans ce cas, lorsque le cadre est soumis à un effort vertical, les haubans vont toujours pouvoir se déformer latéralement, cette fois-ci en se rapprochant l'un de l'autre.

La préforme des haubans vus de l'arrière peut avoir un rayon de courbure constant. En variante, la préforme des haubans vus de l'arrière peut avoir des rayons de courbure variables sur sa longueur.

On peut également prévoir que la préforme des haubans comporte une portion arquée vers l'extérieur suivie d'une portion arquée vers l'intérieur du cadre, ou, plus généralement, une succession de portions d'arcs de cercle alternativement arqués vers l'intérieur puis vers l'extérieur du cadre de vélo.

Dans tous les cas de figures, les haubans peuvent se déformer latéralement sous l'action d'un effort vertical, et se rapprocher et/ou s'écarter l'un de l'autre.

Un comparatif des déformations des haubans obtenus pour le cadre de l'invention représenté sur les figures 2 et suivantes, et pour le cadre de l'art antérieur illustré sur la figure 1 est donné sur les figures 7a et 7b. Le test a consisté, pour les deux cadres, à fixer la partie arrière des cadres, au niveau du tube supérieur et du boîtier de pédalier, ainsi que latéralement au niveau des jonctions entre bases et haubans, de façon à simuler la présence d'une roue arrière. Une force F a été alors appliquée vers le haut au niveau des jonctions entre les bases et les haubans. La partie (a) de la figure 7a représente la déformation obtenue avec le cadre de la figure 1, pour lequel les haubans sont droits en position de repos et reliés par un pont support de frein, alors que la partie (b) de la figure 7a représente la déformation obtenue avec un cadre conforme à l'invention. Le test a été effectué pour une force F égale à 1000 Newtons, puis pour une force F égale à 2000 Newtons. Les valeurs de déplacement vertical dᵥ de l'axe de la roue arrière ont été mesurées dans chaque cas, les résultats étant illustrés sur la figure 7b. Sur cette figure 7b, la partie (a) correspond aux résultats obtenus pour le cadre de la figure 1, et la partie (b) correspond aux résultats obtenus pour le cadre conforme à l'invention, respectivement pour une force de 2000 Newtons (rectangle hachuré) et pour une force de 1000 Newtons (rectangle quadrillé). Les déformations latérales des haubans selon l'invention sont plus importantes que les déformations latérales obtenues dans les mêmes conditions avec les haubans droits de la figure 1. Il en résulte un déplacement dᵥ plus important d'environ 20% pour le cadre de l'invention, ce qui se traduit par un confort amélioré pour le cycliste.

D'autres tests ont permis de mettre en avant d'une part, l'incidence des sections des haubans sur les résultats obtenus en termes de déplacement latéral, et d'autre part la prépondérance de la déformation latérale des haubans par rapport à une déformation verticale. Les tests ont été simulés pour des cadres en aluminium avec des tubes pleins.

Sur le Tableau 1 ci-dessous, on voit notamment que la section aérodynamique des haubans 12a, 12b du cadre selon l'invention permet d'obtenir un déplacement latéral trois fois supérieur à celui obtenu pour un hauban de section cylindrique pour un même effort vertical de 100 Newtons :

**Tableau 1**

| | Déplacement latéral (parallèlement à l'axe de rotation de la roue arrière) [mm] | Déplacement frontal (selon l'axe longitudinal du hauban) [mm] |
|---|---|---|
| Haubans 12a, 12b | 10, 13 | 1,47 |
| Hauban cylindrique | 3,34 | 3,34 |

Sur le Tableau 2 ci-dessous, on voit que les haubans 12a, 12b selon l'invention, soumis dans le cadre du test à un effort vertical de 2000 Newtons, se déforment principalement en direction latérale :

**Tableau 2**

| | Proportion de déplacem ent maximum |
|---|---|
| Direction parallèle à l'axe de la roue arrière | 80% |
| Direction perpendiculaire à l'axe de la roue arrière | 20% |

On comprend aisément que les résultats obtenus en termes de déformation latérale des haubans préformés selon l'invention dépendent également de la longueur de ces haubans. Des tests ont montré que la déformation latérale d'un hauban à préforme arquée est proportionnelle à la longueur de ce hauban. Ainsi, plus longs seront ces haubans, meilleure sera la déformation latérale obtenue sous l'action d'un effort vertical.

La longueur des haubans peut être optimisée en choisissant judicieusement la zone au niveau de laquelle l'extrémité supérieure des haubans 12a, 12b va être reliée. Le choix est bien entendu également dépendant du type de cadre, selon que sa géométrie est traditionnelle ou compacte.

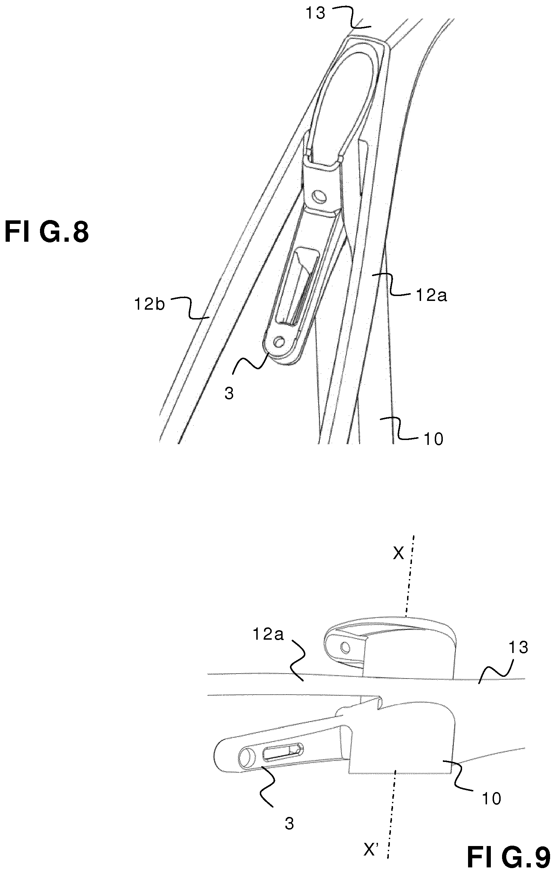

Dans le mode de réalisation représenté sur les figures 2 et suivantes à titre d'exemple non limitatif, l'extrémité supérieure du tube de selle 10 est sensiblement au même niveau que la zone de jonction entre le tube de selle 10 et le tube supérieur 13. On choisit avantageusement dans ce cas, comme plus particulièrement visible sur les figures 8 et 9, de relier l'extrémité supérieure de chaque hauban 12a, 12b sur une zone du tube de selle 10 placée le plus en avant possible du tube de selle 10, par exemple ici sur la moitié avant latérale du tube de selle 10, au-delà de l'axe longitudinal XX' du tube de selle 10.

Dans un autre mode de réalisation possible non représenté, l'extrémité supérieure de chaque hauban pourrait être couplée directement au tube supérieur du cadre, les haubans passant dans ce cas au-delà du tube de selle.

Dans d'autres configurations de cadres pour lesquelles le tube supérieur est relié sur une partie intermédiaire du tube de selle, on privilégiera la fixation de l'extrémité supérieure des haubans au niveau de l'extrémité supérieure du tube de selle, le plus haut possible et le plus en avant possible sur le tube de selle.

Comme cela a été indiqué précédemment, le cadre conforme à l'invention ne peut pas comporter de pont support pour frein arrière reliant les deux haubans, car un tel pont empêcherait les haubans de se rapprocher ou de s'écarter l'un de l'autre sous l'action d'un effort vertical. Lorsqu'il est envisagé d'utiliser le cadre en combinaison avec un frein arrière à patins, le cadre de l'invention peut comporter une patte de fixation 3 pour frein à patins qui s'étend dans le plan de symétrie du cadre, depuis le tube de selle 10 vers la partie arrière (voir figures 3, 4, 6, 7 et 8), sans contact avec les haubans. Cette patte de fixation 3 peut être moulée avec le tube de selle 10, ou rapportée au tube de selle 10, par exemple par collage. Cette patte de fixation ne vient ainsi en rien gêner le déplacement latéral des haubans. De plus, la patte de fixation reste cachée derrière le tube se selle, ce qui contribue encore à l'aérodynamisme. En variante, un frein arrière à patins peut également être supporté sous les deux bases 11a, 11b par un élément de fixation solidaire du boîtier de pédalier 15 du cadre de vélo 1. Pour un frein arrière à disque, un élément de support peut être prévu à chaque extrémité des haubans au niveau des jonctions avec les bases.

## Revendications

1. Cadre de vélo (1) comportant un tube de selle (10) configuré pour recevoir une tige de selle (2), une partie avant comprenant un tube supérieur (13) reliant le tube de selle (10) à un tube de direction (16), ledit tube de selle (10), ledit tube supérieur (13) et ledit tube de direction (16) s'étendant dans un plan de symétrie du cadre de vélo (1), et une partie arrière comprenant deux bases (11a, 11b) et deux haubans (12a, 12b) disposés symétriquement par rapport au plan de symétrie du cadre de vélo (1), **caractérisé en ce que** chaque hauban (12a, 12b) présente une section en coupe transversale perpendiculaire de forme allongée selon une direction parallèle au plan de symétrie, **en ce que** les deux haubans (12a, 12b) sont indépendants l'un de l'autre et **en ce que** les deux haubans (12a, 12b) ont une préforme arquée selon au moins un arc de cercle dans un plan passant par les deux haubans, de manière à permettre aux deux haubans de s'écarter ou de se rapprocher l'un de l'autre sous l'action d'un effort vertical.

2. Cadre de vélo (1) selon la revendication 1, **caractérisé en ce que** la préforme est arquée vers l'extérieur du cadre de vélo (1).

3. Cadre de vélo (1) selon la revendication 1, **caractérisé en ce que** la préforme est arquée vers l'intérieur du cadre de vélo (1).

4. Cadre de vélo (1) selon la revendication 1, **caractérisé en ce que** la préforme comporte une succession d'arcs de cercle alternativement arqués vers l'intérieur puis vers l'extérieur du cadre de vélo (1).

5. Cadre de vélo (1) selon l'une quelconque des revendications précédentes, **caractérisé en ce que** les deux haubans (12a, 12b) sont reliés chacun sur une moitié latérale avant du tube de selle (10).

6. Cadre de vélo (1) selon l'une quelconque des revendications 1 à 5, **caractérisé en ce que** les deux haubans (12a, 12b) sont reliés chacun sur l'extrémité supérieure du tube de selle (10).

7. Cadre de vélo (1) selon l'une quelconque des revendications précédentes, **caractérisé en ce qu'**il comporte en outre une patte de fixation (3) pour frein à patins qui s'étend dans le plan de symétrie du cadre, depuis le tube de selle (10) vers la partie arrière.

8. Cadre de vélo (1) selon l'une quelconque des revendications 1 à 6, **caractérisé en ce qu'**il comporte en outre un élément de fixation solidaire d'un boîtier de pédalier (15) dudit cadre de vélo (1) pour supporter un frein à patins sous les deux bases (11a, 11b).

9. Cadre de vélo (1) selon l'une quelconque des revendications 1 à 6, **caractérisé en ce qu'**il comporte en outre un élément de support prévu à chaque extrémité des haubans au niveau des jonctions avec les bases pour supporter un frein arrière à disque.

## Patentansprüche

1. Fahrradrahmen (1), aufweisend ein Sattelrohr (10), das konfiguriert ist, um eine Sattelstange (2) aufzunehmen, wobei ein vorderer Teil ein oberes Rohr (13) umfasst, das das Sattelrohr (10) mit einem Steuerrohr (16) verbindet, wobei sich das Sattelrohr (10), das obere Rohr (13) und das Steuerrohr (16) in einer Symmetrieebene des Fahrradrahmens (1) erstrecken, und ein hinterer Teil zwei Basen (11a, 11b) und zwei Verspannungen (12a, 12b) umfasst, die in Bezug auf die Symmetrieebene des Fahrradrahmens (1) symmetrisch angeordnet sind, **dadurch gekennzeichnet, dass** jede Verspannung (12a, 12b) einen gemäß einer Richtung parallel zur Symmetrieebene länglichen senkrechten Querschnitt aufweist, dass die zwei Verspannungen (12a, 12b) voneinander unabhängig sind und dass die zwei Verspannungen (12a, 12b) eine gemäß mindestens einem Kreisbogen gebogene Vorform in einer Ebene haben, die durch die zwei Verspannungen verläuft, so dass es den zwei Verspannungen gestattet ist, sich unter der Wirkung einer vertikalen Kraft voneinander zu beabstanden oder einander anzunähern.

2. Fahrradrahmen (1) nach Anspruch 1, **dadurch gekennzeichnet, dass** die Vorform est nach außerhalb des Fahrradrahmens (1) gebogen ist.

3. Fahrradrahmen (1) nach Anspruch 1, **dadurch gekennzeichnet, dass** die Vorform nach innerhalb des Fahrradrahmens (1) gebogen ist.

4. Fahrradrahmen (1) nach Anspruch 1, **dadurch gekennzeichnet, dass** die Vorform eine Abfolge von Kreisbögen aufweist, die abwechselnd nach innerhalb, dann nach außerhalb des Fahrradrahmens (1) gebogen sind.

5. Fahrradrahmen (1) nach einem der vorangehenden Ansprüche, **dadurch gekennzeichnet, dass** die zwei Verspannungen (12a, 12b) jeweils auf einer vorderen seitlichen Hälfte des Sattelrohrs (10) verbunden sind.

6. Fahrradrahmen (1) nach einem der Ansprüche 1 bis 5, **dadurch gekennzeichnet, dass** die zwei Verspannungen (12a, 12b) jeweils auf dem oberen Ende des Sattelrohrs (10) verbunden sind.

7. Fahrradrahmen (1) nach einem der vorangehenden Ansprüche, **dadurch gekennzeichnet, dass** er ferner eine Befestigungslasche (3) für Backenbremse aufweist, die sich in der Symmetrieebene des Rahmens ab dem Sattelrohr (10) zum hinteren Teil erstreckt.

8. Fahrradrahmen (1) nach einem der Ansprüche 1 bis 6, **dadurch gekennzeichnet, dass** er ferner ein Befestigungselement aufweist, das mit einem Tretlagergehäuse (15) des Fahrradrahmens (1) fest verbunden ist, um eine Backenbremse unter den zwei Basen (11a, 11b) zu halten.

9. Fahrradrahmen (1) nach einem der Ansprüche 1 bis 6, **dadurch gekennzeichnet, dass** er ferner ein Halteelement aufweist, das an jedem Ende der Verspannungen im Bereich der Verbindungen mit den Basen vorgesehen ist, um eine hintere Scheibenbremse zu halten.

## Claims

1. A bicycle frame (1) including a seat tube (10) configured to receive a seat post (2), a front part comprising a top tube (13) connecting the seat tube (10) to a head tube (16), said seat tube (10), said top tube (13) and said head tube (16) extending in a plane of symmetry of the bicycle frame (1), and a rear part comprising two bases (11a, 11b) and two seat stays (12a, 12b) arranged symmetrically relative to a plane of symmetry of the bicycle frame (1), **characterized in that** each seat stay (12a, 12b) has a section in perpendicular cross-section of elongated shape in a direction parallel to the plane of symmetry, **in that** the two seat stays (12a, 12b) are independent of one another and **in that** the two seat stays (12a, 12b) have a preform bowed in at least one arc of circle of a plane passing through the two seat stays, so as to allow the two seat stays to move away from or closer to one another under the action of a vertical force.

2. The bicycle frame (1) according to claim 1, **characterized in that** the preform is bowed toward the outside of the bicycle frame (1).

3. The bicycle frame (1) according to claim 1, **characterized in that** the preform is bowed toward the inside of the bicycle frame (1).

4. The bicycle frame (1) according to claim 1, **characterized in that** the preform includes a series of arcs of circle alternately bowed toward the inside, then toward the outside of the bicycle frame (1).

5. The bicycle frame (1) according to any one of the preceding claims, **characterized in that** the two seat stays (12a, 12b) are each connected on a front lateral half of the seat tube (10).

6. The bicycle frame (1) according to any one of claims 1 to 5, **characterized in that** the two seat stays (12a, 12b) are each connected on the upper end of the seat tube (10).

7. The bicycle frame (1) according to any one of the preceding claims, **characterized in that** it further includes a fastening tab (3) for a brake with pads that extends in the plane of symmetry of the frame, from the seat tube (10) toward the rear part.

8. The bicycle frame (1) according to any one of claims 1 to 6, **characterized in that** it further includes a fastening element secured to a bottom bracket (15) of said bicycle frame (1) in order to support a brake with pads below the two bases (11a, 11b).

9. The bicycle frame (1) according to any one of claims 1 to 6, **characterized in that** it further includes a support element provided at each end of the seat stays at the junctions with the bases in order to support a rear disc brake.
